# EUROPÄISCHE PATENTSCHRIFT

(11) **EP 1 388 360 B1**
(45) Veröffentlichungstag und Bekanntmachung des Hinweises auf die Patenterteilung: **12.10.2005**
(21) Anmeldenummer: 03016865.2
(22) Anmeldetag: 24.07.2003
(51) Int. Cl.: B01D 29/21

(54) **Ringfiltereinsatz für ein Fluidfilter**
Ring filter insert for a fluid filter
Elément filtrant annulaire pour filtre à fluides

(30) Priorität: 06.08.2002 DE 10235904
(43) Veröffentlichungstag der Anmeldung: 11.02.2004
(73) Patentinhaber: MAHLE Filtersysteme GmbH, 70376 Stuttgart (DE)
(72) Erfinder: Schneider, Horst, 71336 Waiblingen (DE); Waibel, Hans, 71686 Remseck/Aldingen (DE)
(74) Vertreter: Patentanwalts-Partnerschaft Rotermund + Pfusch + Bernhard

(56) Entgegenhaltungen:
- WO-A-01/07146
- DE-A- 19 933 205

## Beschreibung

Die vorliegende Erfindung betrifft einen innenzargenlosen Ringfiltereinsatz für ein Fluidfilter, insbesondere für ein Flüssigkeitsfilter, z.B. Ölfilter oder Kraftstofffilter, mit den Merkmalen des Oberbegriffs des Anspruchs 1.

Aus der DE 199 33 205 A1 ist ein Ringfiltereinsatz der eingangs genannten Art bekannt, der für eine Verwendung in einem Luftfilter ausgebildet ist. Der Ringfiltereinsatz besitzt keine Innenzarge, da im Betrieb des damit ausgestatteten Luftfilters nur relativ kleine Druckdifferenzen zwischen außenliegender Rohseite und innenliegender Reinseite auftreten, so dass eine Abstützung des plissierten, ringförmig angeordneten Filtermaterials radial nach innen nicht erforderlich ist. Das Filtermaterial ist an seinen axialen Enden jeweils mit einer Endscheibe ausgestattet, die aus einem thermoplastischen Kunststoff hergestellt sein kann, so dass es möglich ist, das Filtermaterial durch Plastifizierung an der jeweiligen Endscheibe zu befestigen. Jede Endscheibe ist als zentral offene Endscheibe ausgebildet und besitzt an ihrem radial innenliegenden Rand einen axial nach innen abstehenden, einstückig mit der Endscheibe hergestellten Dichtungskragen. Dieser Dichtungskragen besitzt eine ringförmige und linienförmige Dichtzone oder Dichtlinie, die im Einbauzustand des Ringfiltereinsatzes mit radialer Vorspannung an einer im wesentlichen zylindrischen Dichtfläche des Luftfilters radial anliegt. Von besonderer Bedeutung ist hierbei, dass die für eine hinreichende Dichtwirkung benötigte radiale Vorspannung ohne die Verwendung zusätzlicher, separater Vorspannmittel vom Dichtungskragen erzeugt wird. Hierdurch ergibt sich für den Ringfiltereinsatz ein besonders preiswerter Aufbau. Des Weiteren ist der Dichtkragen so gestaltet, dass er im Einbauzustand des Ringfiltereinsatzes seine Dichtwirkung bei einer relativ zur Dichtfläche axial schwimmenden Lagerung entfaltet. Das bedeutet, dass der Dichtkragen bzw. der Ringfiltereinsatz im Einbauzustand axiales Spiel besitzen kann.

Beim bekannten Ringfiltereinsatz geht die Endscheibe an ihrem Innenrand durch eine Verjüngung in einen ersten Teilabschnitt des Dichtungskragens über, der zur Dichtfläche hin geneigt ist und im Bereich der Dichtlinie in einen zweiten Teilabschnitt übergeht, der dann von der Dichtfläche weggeneigt ist. Dieser Übergangsbereich am Innenrand der Endscheibe besitzt eine radiale Mindesterstreckung, um die erforderliche Flexibilität für den Dichtungskragen gewährleisten zu können. Hierdurch entsteht in radialer Richtung ein relativ großer Freiraum zwischen dem Dichtungskragen und der Innenseite des Filtermaterials. Wenn für eine bestimmte Anwendung mehr Filterfläche benötigt wird, kann dieser Freiraum nicht ausgenutzt werden, da sonst die benötigte Flexibilität des Dichtungskragens verloren ginge, was im Betrieb zu Beschädigungen führen könnte.

Aus der WO 01/07146 A1 ist ein mit einer Innenzarge ausgestatteter Ringfiltereinsatz für ein Luftfilter bekannt, bei dem ein Dichtungskragen einen zylindrischen Stützabschnitt aufweist, der einen die Dichtzone aufweisenden Dichtungsabschnitt mit der Endscheibe verbindet. Der Dichtungskragen ist dabei so ausgestaltet, dass ein axial außenliegender Teilabschnitt des Dichtungsabschnitts im Einbauzustand des Ringfiltereinsatzes radial nach außen umgebogen wird, wodurch sich zum einen eine axiale Verspannung des Ringfiltereinsatzes in einem Gehäuse des Luftfilters ausbildet. Um die axialen Einspannkräfte über die jeweilige Endscheibe auf die Innenzarge übertragen zu können, ist der relativ stabile Stützabschnitt vorgesehen, dessen radiale Wandstärke im wesentlichen der in axialer Richtung gemessenen Dicke der Endscheibe entspricht. Durch die zur axialen Abstützung erforderliche Innenzarge besitzt der bekannte Ringfiltereinsatz einen relativ hohen Herstellungsaufwand. Zum anderen erzeugt das Umbiegen des außenliegenden Teilabschnitts des Dichtungsabschnitts im Bereich der Dichtzone eine radial nach innen gerichtete Vorspannkraft, die gewährleistet, dass die Dichtzone mit radialer Vorspannung an der zylindrischen Dichtfläche des Luftfilters anliegt. Ohne diese axiale Verspannung könnte der Dichtungskragen dieses Ringfiltereinsatzes die geforderte Dichtungswirkung nicht erbringen.

Aus der DE 43 22 226 A1 und der DE 43 18 215 A1 sind weitere innenzargenlose Ringfiltereinsätze für Luftfilter bekannt, bei denen die Endscheiben jeweils mit einem Dichtungskragen ausgestattet sind. Damit bei diesen Ringfiltereinsätzen die linienförmige Dichtzone oder Dichtlinie mit der zur Erzielung der Dichtwirkung benötigten radialen Vorspannung an der Dichtfläche anliegen kann, müssen zusätzliche, separate Vorspannmittel, z.B. ein Spannring, verwendet werden. Der Einbau eines derartigen zusätzlichen Bauteils ist jedoch mit einem erhöhten Herstellungsaufwand verbunden. Darüber hinaus erschwert sich das Recycling des Ringfiltereinsatzes, wenn die unterschiedlichen Werkstoffe getrennt werden sollen. Schließlich ist der Ringfiltereinsatz nicht vollständig veraschbar, wenn das jeweilige Vorspannmittel z.B. aus Metall besteht. Während bei der DE 43 22 226 A1 der Dichtungskragen in radialer Richtung zumindest von der Endscheibe bis zur Dichtlinie eine Wandstärke aufweist, die zumindest gleich groß ist wie die axiale Dicke der Endscheibe, besitzt der Dichtkragen bei der DE 43 18 215 A1 eine Einschnürung, in der sich die Wandstärke des Dichtungskragens bis zur Endscheibe hin verjüngt. Durch die Einschnürung erhält der Dichtungskragen an seiner dünnsten Stelle, also unmittelbar an der Endscheibe eine relativ große Flexibilität. Um die für die Dichtwirkung erforderliche radiale Vorspannung an der Dichtlinie erzeugen zu können, sind bei diesem Dichtkragen die vorgesehenen, zusätzlichen Vorspannmittel zwingend erforderlich.

Die DE 38 38 540 A1 zeigt einen weiteren Ringfiltereinsatz für ein Luftfilter, der an einer Seite eine offene Endscheibe besitzt, an der ein Dichtungskragen axial nach außen absteht. Der Dichtungskragen besitzt hier eine Flächendichtung, die sich axial an einer komplementär geformten Dichtfläche des Luftfilters abstützt. Um eine axiale Vorspannung dieser Flächendichtung gegen die Dichtfläche erzielen zu können, besitzt der Dichtungskragen einen zylindrischen Stützabschnitt, über den sich ein ringscheibenförmiger Federabschnitt an der Endscheibe abstützt. Dabei trägt dieser Federabschnitt die Flächendichtung und ist in axialer Richtung federelastisch gestaltet, während der Stützabschnitt die Vorspannkräfte in axialer Richtung an der Endscheibe abstützt. Hierfür besitzt der Stützabschnitt etwa dieselbe Wandstärke wie die Endscheibe.

Die vorliegende Erfindung beschäftigt sich mit dem Problem, für einen Ringfiltereinsatz der eingangs genannten Art eine verbesserte Ausführungsform anzugeben, die insbesondere preiswert herstellbar ist und mit einer relativ großen Filterfläche ausgestattet werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, im Dichtungskragen einen zylindrischen Distanzabschnitt auszubilden, der einen mit der Dichtlinie versehenen Dichtungsabschnitt gegenüber der Endscheibe beabstandet an der Endscheibe haltert. Von besonderer Bedeutung ist dabei, dass dieser Distanzabschnitt in radialer Richtung eine Wandstärke besitzt, die deutlich kleiner ist als die in axialer Richtung gemessene Dicke der Endscheibe. Insbesondere ist die Wandstärke des Distanzabschnitts etwa halb so groß wie die Dicke der Endscheibe. Durch die zylindrische Form und durch die gegenüber der Endscheibe reduzierte Wandstärke besitzt der Distanzabschnitt eine Federelastizität, die bei einer Belastung der Dichtlinie entgegen ihrer Vorspannkraft Biegeverformungen ermöglicht, bei denen sich der Distanzabschnitt an seinem mit der Endscheibe verbundenen Ende kaum bewegt. Dementsprechend gering sind dann auch die in der Endscheibe auftretenden Biegebelastungen, wodurch sich die Lebensdauer des erfindungsgemäßen Ringfiltereinsatzes erhöht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen axialen Längsschnitt durch einen Ringfiltereinsatz nach der Erfindung,
- Fig. 2: eine vergrößerte Darstellung eines Details II aus Fig. 1.

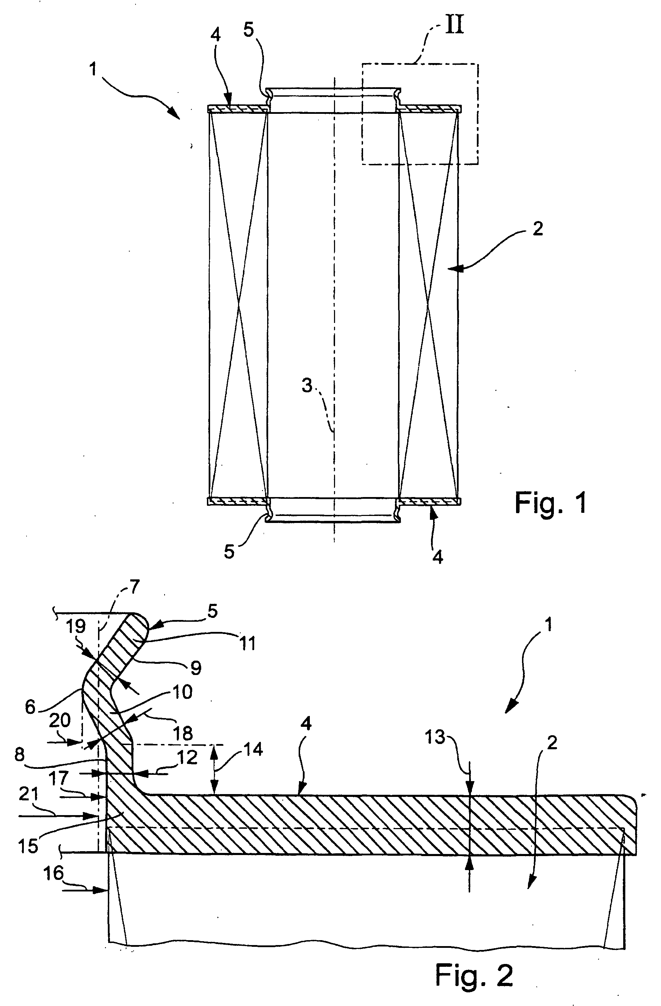

Entsprechend Fig. 1 besitzt ein Ringfiltereinsatz 1 nach der Erfindung ein gefaltetes bzw. plissiertes Filtermaterial 2, das ringförmig und koaxial zu einer Längsmittelachse 3 des Ringfiltereinsatzes 1 angeordnet ist. Dieses Filtermaterial 2 besteht z.B. aus Vlies oder Paper und ist an seinen axialen Enden jeweils mit einer Endscheibe 4 ausgestattet. Zweckmäßig besteht der erfindungsgemäße Ringfiltereinsatz 1 ausschließlich aus diesen drei genannten Bauteilen, nämlich aus einem Filtermaterial 2 und zwei Endscheiben 4. Somit ist der erfindungsgemäße Ringfiltereinsatz extrem preiswert herstellbar. Von besonderer Bedeutung ist hierbei, dass der erfindungsgemäße Ringfiltereinsatz 1 für eine Verwendung in einem Flüssigkeitsfilter, z.B. in einem Ölfilter oder in einem Kraftstofffilter, ausgebildet ist und insbesondere bei einer Brennkraftmaschine, vorzugsweise in einem Kraftfahrzeug, zur Anwendung kommt. Bemerkenswert ist dabei, dass der Ringfiltereinsatz 1 ohne Innenzarge ausgestattet ist. Die für einen Betrieb in einem Flüssigkeitsfilter erforderliche Innenzarge kann beim Einsetzen des erfindungsgemäßen Ringfiltereinsatzes in ein Gehäuse des Flüssigkeitsfilters durch die Endscheiben 4 hindurch in den Ringfiltereinsatz eingesteckt werden. Zu diesem Zweck sind die beiden Endscheiben 4, vorzugsweise jedoch wenigstens eine der Endscheiben 4, als zentral offene Endscheiben 4 ausgebildet.

Wenigstens eine der Endscheiben 4, hier beide, ist mit einem Dichtungskragen 5 ausgestattet, der axial von der Endscheibe 4 absteht und mit dieser einstückig hergestellt ist. Der Dichtungskragen 5 bildet somit einen integralen Bestandteil der Endscheibe 4. Die Endscheibe 4 besteht üblicherweise aus einem Kunststoff. Bevorzugt wird hier ein thermoplastischer Kunststoff, wodurch es möglich ist, die Endscheiben 4 durch Plastifizierung mit dem Filtermaterial 2 zu verbinden. Dementsprechend taucht das Filtermaterial 2 gemäß Fig. 2 axial in die jeweilige Endscheibe 4 ein. Bei der hier gezeigten bevorzugten Ausführungsform steht der Dichtungskragen 5 von der zugehörigen Endscheibe 4 nach außen ab. Dadurch ist es möglich, die vom Dichtungskragen 5 abgewandte Innenseite der jeweiligen Endscheibe 4 nahezu vollständig zur Anbindung des Filtermaterials 2 zu verwenden. Dementsprechend kann eine besonders große Filterfläche bereitgestellt werden.

Entsprechend Fig. 2 besitzt der Dichtungskragen 5 eine Dichtzone 6, die ringförmig und linienförmig gestaltet ist und im folgenden daher als Dichtlinie 6 bezeichnet wird. Der Dichtungskragen 5 ist hier in einem entspannten Ausgangszustand dargestellt. Im Einbauzustand des Ringfiltereinsatzes 1 kommt die Dichtlinie 6 an einer durch eine unterbrochene Linie angedeuteten zylindrischen Dichtfläche 7 des Flüssigkeitsfilters mit einer radialen Vorspannung radial zur Anlage. Die radiale Vorspannung wird dabei durch die Formgebung des Dichtungskragens 5 erzeugt, so dass der erfindungsgemäße Ringfiltereinsatz 1 ohne zusätzliche, separate Vorspannmittel, wie z.B. eine Ringfeder, auskommt. Bei der hier gezeigten Ausführungsform dichtet die Dichtlinie 6 radial nach innen.

Erfindungsgemäß besteht der Dichtungskragen 5 aus zwei Abschnitten, nämlich aus einem Distanzabschnitt 8 und aus einem Dichtungsabschnitt 9, wobei sich dieser Dichtungsabschnitt 9 seinerseits wieder in zwei Teilabschnitte unterteilt, nämlich in einen inneren Teilabschnitt 10 und einen äußeren Teilabschnitt 11. Am Dichtungsabschnitt 9 ist am Übergang zwischen den beiden Teilabschnitten 10, 11 die Dichtlinie 6 ausgebildet. Der Distanzabschnitt 8 verbindet den Dichtungsabschnitt 9 mit der Endscheibe 4, wodurch die Dichtlinie 6 einen vergrößerten Abstand zur Endscheibe 4 besitzt. Der Distanzabschnitt 8 ist zylindrisch ausgebildet und erstreckt sich koaxial zur Längsmittelachse 3 (vgl. Fig. 1) des Ringfiltereinsatzes 1. Eine radial gemessene Wandstärke 12 des Distanzabschnitts 8 ist erfindungsgemäß deutlich kleiner als eine in axialer Richtung gemessene Dicke 13 der Endscheibe 4. Die Endscheibendicke 13 bezieht sich dabei auf das Ausgangsmaß vor der Einplastifizierung des Filtermaterials 2. Erfindungsgemäß ist die Wandstärke 12 des Distanzabschnitts 8 so gewählt, dass sie etwa 40 % bis 60 % der Endscheibendicke 13 beträgt. Der Distanzabschnitt 8 ist sowohl an seiner radialen Innenseite als auch an seiner radialen Außenseite zylindrisch ausgebildet, so dass die Wandstärke 12 des Distanzabschnitts 8 in axialer Richtung abgesehen von Übergangsrundungen im wesentlichen konstant ist.

Durch die gewählte Geometrie und Dimensionierung des Distanzabschnitts 8 ergibt sich für den Dichtungsabschnitt 9 die erforderliche Flexibilität, ohne dass dabei an der Endscheibe 4, insbesondere im Bereich des Filtermaterials 2, unerwünscht hohe Spannungen auftreten.

Ein weiteres wichtiges Maß zur Erzielung der gewünschten Flexibilität bildet eine in axialer Richtung gemessene Länge 14 des Distanzabschnitts 8. Bei einer bevorzugten Ausführungsform ist diese Länge 14 so gewählt, dass sie etwa 80 % bis 200 % der Endscheibendicke 13 beträgt. In der hier gezeigten Ausführungsform liegt die Länge 14 des Distanzabschnitts 8 etwa bei 100 % der Endscheibendicke 13.

Bei der hier gezeigten bevorzugten Ausführungsform ist der Dichtungskragen 5 an einem radial innenliegenden Rand 15 der Endscheibe 4 angeordnet. Dementsprechend ist auch der Distanzabschnitt 8 an diesem Innenrand 15 angeordnet. Zweckmäßig erfolgt die Positionierung des Distanzabschnitts 8 dabei so, dass dieser radial bündig mit dem Innenrand 15 abschließt. Der Distanzabschnitt 8 bildet somit eine Art axiale Verlängerung des Innenrands 15. Auf diese Weise wird am Innenrand 15 der Endscheibe 4 eine besonders großflächige Auflagefläche geschaffen, die bei einer Verstellbewegung des Ringfiltereinsatzes 1 quer zu seiner Längsmittelachse 3 an der Dichtfläche 7 des Flüssigkeitsfilters zur Anlage kommt und ggf. auftretende Querkräfte aufnimmt. Durch diese Bauweise ist der Dichtungsabschnitt 9 von diesen Querkräften entlastet. Derartige Verstellbewegungen und damit einhergehende Querkräfte können insbesondere dann auftreten, wenn das Flüssigkeitsfilter in einem Fahrzeug montiert ist.

Die durch den erfindungsgemäßen Distanzabschnitt 8 geschaffene Flexibilität des Dichtungskragens 5 führt beim Aufweiten des Dichtungsabschnitts 9 zu einem Biegeverhalten, bei dem unmittelbar an oder in der Endscheibe 4 keine oder nur noch geringfügige Formänderungen auftreten. Hierdurch kann die vom Dichtungskragen 8 abgewandte Innenseite der Endscheibe 4 besonders großflächig zur Anbringung des Filtermaterials 2 ausgenutzt werden. Dementsprechend kann bei bevorzugten Ausführungsformen eine Differenz zwischen einem Innenradius 16 des Filtermaterials 2 und einem Innenradius 17 des Distanzabschnitts 8 relativ klein sein, zumindest kleiner als die Wandstärke 12 des Distanzabschnitts 8.

Da hier der Distanzabschnitt 8 bündig mit dem Innenrand 15 der Endscheibe 4 abschließt, entspricht der Innenradius 17 des Distanzabschnitts 8 auch dem Innenradius der Endscheibe 4.

Die genannte Differenz zwischen den Innenradien 16 und 17 kann sehr klein gewählt werden und im Extremfall auch um den Wert Null liegen. Bei der hier gezeigten Ausführungsform erstreckt sich das Filtermaterial 2 im wesentlichen bis zum radial innenliegenden Rand 15, so dass es mit diesem Innenrand 15 und dem Distanzabschnitt 8 im wesentlichen radial bündig abschließt. Zum einen bietet diese Bauweise eine maximale Filterfläche. Zum anderen kann der Ringfiltereinsatz 1 so besonders einfach auf eine Innenzarge aufgesteckt werden, an der das Filtermaterial 2 im wesentlichen ohne Verformung oder mit nur geringfügiger Verformung radial innen zur Anlage kommt, wenn am Filtermaterial 2 eine entsprechende Druckdifferenz anliegt.

Des Weiteren ist beim erfindungsgemäßen Ringfiltereinsatz 1 die Formgebung des Dichtungskragens 5 so gewählt, dass er seine Dichtwirkung im Einbauzustand des Ringfiltereinsatzes 1 auch dann entfaltet, wenn der Ringfiltereinsatz 1 über seine Dichtungskragen 5 im Flüssigkeitsfilter relativ zur Dichtfläche 7 (vgl. Fig. 2) axial schwimmend gelagert ist. Das bedeutet, dass es auf eine genaue axiale Positionierung des Ringfiltereinsatzes 1 im jeweiligen Flüssigkeitsfilter nicht ankommt, so dass insbesondere in axialer Richtung auch ein Spiel auftreten kann.

Damit der Dichtungsabschnitt 9 die gewünschte axiale Vorspannung für die Dichtlinie 6 erzeugen kann, sind die beiden Teilabschnitte 10, 11 jeweils im Profil geradlinig ausgebildet. Dabei verbindet der innere Teilabschnitt 10 den Distanzabschnitt 8 mit dem äußeren Teilabschnitt 11. Ausgehend vom Distanzabschnitt 8 ist der innere Teilabschnitt 10 zur Dichtfläche 7 hin geneigt und erstreckt sich bis zur Dichtlinie 6. Ausgehend von der Dichtlinie 6 ist der äußere Teilabschnitt 11 von der Dichtfläche 7 weggeneigt. Der innere Teilabschnitt 10 besitzt quer zu seiner Erstreckungsrichtung eine Dicke 18; in entsprechender Weise besitzt auch der äu-βere Teilabschnitt 11 quer zu seiner Erstreckungsrichtung eine Dicke 19. Die Dicken 18, 19 der Teilabschnitte 10, 11 sind gleich groß gewählt und insbesondere gleich groß wie die Wandstärke 12 des Distanzabschnitts 8 gewählt. Um die gewünschte Vorspannung für die Dichtlinie 6 zu erreichen, ist ein Innenradius 20 der Dichtlinie 6 im entspannten Zustand des Dichtungskragens 5 etwa 2% bis 4% und/oder etwa 0,3 mm bis 0,5 mm kleiner als ein Außenradius 21 der Dichtfläche 7. Um dieses Maß muss demnach der Dichtungskragen 5 im Bereich der Dichtlinie 6 beim Aufstecken auf die Dichtfläche 7 aufgeweitet werden.

Damit der Dichtungsabschnitt 9 bei den vorgenannten dynamischen Querbewegungen des Ringfiltereinsatzes 1 nicht beschädigt, insbesondere bleibend verformt wird, ist der Innenradius 17 des Distanzabschnitts 8 im entspannten Zustand des Dichtungskragens 5 nur geringfügig, insbesondere etwa 0,5% bis 4% und/oder nur etwa 0,1 mm bis 0, 5 mm, größer als der Außenradius 21 der Dichtfläche 7. Durch diese Dimensionierung ergibt sich im Einbauzustand nur ein sehr kleiner Spalt zwischen der Dichtfläche 7 und der Auflagefläche, die durch die bündigen Innenseiten des Distanzabschnitts 8 und des Innenrands 15 gebildet ist. Die durch Querverstellungen des Ringfiltereinsatzes 1 möglichen Verformungen des Dichtungskragens 5 sind somit relativ eng begrenzt und liegen im Elastizitätsbereich des Dichtungskragen 5.

## Patentansprüche

1. Innenzargenloser Ringfiltereinsatz für ein Fluidfilter, insbesondere für ein Flüssigkeitsfilter, z.B. Ölfilter oder Kraftstofffilter,
- mit einem plissierten, ringförmig angeordneten Filtermaterial (2), das an seinen axialen Enden jeweils mit einer Endscheibe (4) ausgestattet ist,
- wobei zumindest eine der Endscheiben (4) als zentral offene Endscheibe (4) ausgebildet ist und einen axial abstehenden, einstückig damit hergestellten Dichtungskragen (5) aufweist, der eine ringförmige und linienförmige Dichtzone oder Dichtlinie (6) aufweist, die im Einbauzustand des Ringfiltereinsatzes (1) mit radialer Vorspannung an einer im wesentlichen zylindrischen Dichtfläche (7) des Fluidfilters radial anliegt,
- wobei der Dichtungskragen (5) so ausgebildet ist, dass er die radiale Vorspannung ohne die Verwendung zusätzlicher, separater Vorspannmittel erzeugt,
- wobei der Dichtungskragen (5) so ausgebildet ist, dass er im Einbauzustand des Ringfiltereinsatzes (1) seine Dichtwirkung auch bei einer relativ zur Dichtfläche (7) axial schwimmenden Lagerung entfaltet,
**dadurch gekennzeichnet,**
**dass** der Dichtungskragen (5) einen von der Endscheibe (4) abstehenden, sich axial erstreckenden, zylindrischen Distanzabschnitt (8) aufweist, der einen die Dichtlinie (6) aufweisenden Dichtungsabschnitt (9) trägt und in radialer Richtung eine konstante Wandstärke (12) besitzt, die etwa 40 % bis 60 % einer in axialer Richtung gemessenen Dicke (13) der Endscheibe (4) beträgt.

2. Ringfiltereinsatz nach Anspruch 1,
**dadurch gekennzeichnet,**
**dass** der Distanzabschnitt (8) am radial innenliegenden Rand (15) der Endscheibe (4) angeordnet ist und mit diesem Rand (15) radial bündig abschließt.

3. Ringfiltereinsatz nach Anspruch 2,
**dadurch gekennzeichnet,**
**dass** der Distanzabschnitt (8) axial nach außen von der Endscheibe (4) absteht und dass eine Differenz zwischen einem Innenradius (16) des Filtermaterials (2) und einem Innenradius (17) des Distanzabschnitts (8) kleiner ist als die Wandstärke (12) des Distanzabschnitts (8).

4. Ringfiltereinsatz nach Anspruch 2 oder 3,
**dadurch gekennzeichnet,**
**dass** der Distanzabschnitt (8) axial nach außen von der Endscheibe (4) absteht und dass sich das Filtermaterial (2) im wesentlichen bis zum radial innenliegenden Rand (15) der Endscheibe (4) erstreckt und mit diesem Rand (15) und dem Distanzabschnitt (8) im wesentlichen radial bündig abschließt.

5. Ringfiltereinsatz nach einem der Ansprüche 1 bis 4,
**dadurch gekennzeichnet,**
**dass** eine axiale Länge (14) des Distanzabschnitts (8) etwa 80% bis 200% der Dicke (13) der Endscheibe (4) beträgt.

6. Ringfiltereinsatz nach einem der Ansprüche 1 bis 5,
**dadurch gekennzeichnet,**
- **dass** der Dichtungsabschnitt (9) zwei im Profil geradlinige Teilabschnitte (10, 11) aufweist,
- wobei der innere Teilabschnitt (10) den Distanzabschnitt (8) mit dem äußeren Teilabschnitt (11) verbindet,
- wobei der innere Teilabschnitt (10) zur Dichtfläche (7) hin geneigt ist, während der äußere Teilabschnitt (11) von der Dichtfläche (7) weggeneigt ist,
- wobei die beiden Teilabschnitte (10, 11) quer zu ihrer jeweiligen Erstreckungsrichtung dieselbe Dicke (18, 19) aufweisen,
- wobei die Wandstärke (12) des Distanzabschnitts (8) gleich groß gewählt ist wie die Dicke (18, 19) der Teilabschnitte (10, 11).

7. Ringfiltereinsatz nach einem der Ansprüche 1 bis 6,
**dadurch gekennzeichnet,**
**dass** die Endscheibe (4) aus einem thermoplastischen Kunststoff besteht und dass das Filtermaterial durch Plastifizierung mit der Endscheibe (4) verbunden ist.

8. Ringfiltereinsatz nach einem der Ansprüche 1 bis 7,
**dadurch gekennzeichnet,**
**dass** ein Innenradius (20) der Dichtlinie (6) im entspannten Zustand etwa 2% bis 4% und/oder etwa 0,3 mm bis 0,5 mm kleiner ist als ein Außenradius (21) der Dichtfläche (7).

9. Ringfiltereinsatz zumindest nach Anspruch 2,
**dadurch gekennzeichnet,**
**dass** ein Innenradius (17) des Distanzabschnitts (8) im entspannten Zustand etwa 0,5% bis 4% und/oder etwa 0,1 mm bis 0,5 mm größer ist als ein Außenradius (21) der Dichtfläche (7).

10. Ringfiltereinsatz nach einem der Ansprüche 1 bis 9,
**dadurch gekennzeichnet,**
**dass** der Ringfiltereinsatz (1) zur Verwendung in einem Flüssigkeitsfilter, insbesondere Ölfilter oder Kraftstofffilter, ausgebildet ist.

11. Ringfiltereinsatz nach Anspruch 10,
**dadurch gekennzeichnet,**
**dass** der Ringfiltereinsatz (1) zur Verwendung in einem Flüssigkeitsfilter eines Kraftfahrzeugs ausgebildet ist.

12. Flüssigkeitsfilter mit einem zargenlosen Ringfiltereinsatz (1) nach einem der Ansprüche 1 bis 11.

## Claims

1. A ring filter insert without an internal frame for a fluid filter, in particular for a liquid filter, e.g., an oil filter or fuel filter,
- having a pleated filter material (2) arranged in a ring and equipped with an end disk (4) on each of its axial ends,
- wherein at least one of the end disks (4) is designed as an end disk (4) having a central opening and has a sealing collar (5) which is manufactured in one piece with it and protrudes axially, having a ring-shaped and linear sealing zone or sealing line (6) which is in radial contact with an essentially cylindrical sealing face (7) of the fluid filter in the installed state of the ring filter insert (1) with a radial prestress,
- wherein the sealing collar (5) is designed so that it creates the radial prestress without using any additional separate prestressing means,
- wherein the sealing collar (5) is designed so that in the installed state of the ring filter insert (1) it manifests its sealing effect even with an axially floating mount in relation to the sealing face (7),
**characterized in that**
- the sealing collar (5) has a cylindrical spacer section (8) which extends axially and protrudes from the end disk (4), having a sealing section (9) which has the sealing line (6) and having a constant wall thickness (12) in the radial direction, amounting to approximately 40% to 60% of the thickness (13) of the end disk (4) as measured axially.

2. The ring filter insert according to Claim 1,
**characterized in that**
the spacer section (8) is arranged on the radially inside edge (15) of the end disk (4) and is flush with this edge (15) radially.

3. The ring filter insert according to Claim 2,
**characterized in that**
the spacer section (8) protrudes axially outward away from the end disk (4), and the difference between the inside radius (16) of the filter material (2) and the inside radius (17) of the spacer section (8) is smaller than the wall thickness (12) of the spacer section (8).

4. The ring filter insert according to Claim 1 or 2,
**characterized in that**
the spacer section (8) protrudes axially outward from the end disk (4) and the filter material (2) extends essentially up to the edge (15) of the end disk (4) on the inside radially and is essentially flush radially with this inside edge (15) and the spacer section (8).

5. The ring filter insert according to any one of Claims 1 through 4,
**characterized in that**
an axial length (14) of the spacer section (8) amounts to approximately 80% to 200% of the thickness (13) of the end disk (4).

6. The ring filter insert according to any one of Claims 1 through 5,
**characterized in that**
- the sealing section (9) has two partial sections (10, 11) with a linear profile,
- wherein the inner partial section (10) connects the spacer section (8) to the outer partial section (11),
- wherein the inner partial section (10) is inclined toward the sealing face (7) while the outer partial section (11) is inclined away from the sealing face (7),
- wherein the two partial sections (10, 11) have the same thickness (18, 19) across their respective direction of extent,
- wherein the wall thickness (12) of the spacer section (8) is selected to be as large as the thickness (18, 19) of the partial sections (10, 11).

7. The ring filter insert according to any one of Claims 1 through 6,
**characterized in that**
the end disk (4) is made of a thermoplastic material, and the filter material is attached to the end disk (4) by plastification.

8. The ring filter insert according to any one of Claims 1 through 7,
**characterized in that**
an inside radius (20) of the sealing line (6) in the relaxed state amounts to approximately 2% to 4% and/or approximately 0.3 mm to 0.5 mm smaller than an outside radius (21) of the sealing face (7).

9. The ring filter insert according to at least Claim 2,
**characterized in that**
and inside radius (17) of the spacer section (8) in the relaxed state is approximately 0.5% to 4% larger and/or approximately 0.1 mm to 0.5 mm larger than an outside radius (21) of the sealing face (7).

10. The ring filter insert according to any one of Claims 1 through 9,
**characterized in that**
the ring filter insert (1) is designed for use in a fluid filter, in particular an oil filter or a fuel filter.

11. The ring filter insert according to Claim 10,
**characterized in that**
the ring filter insert (1) is designed for use in a fluid filter of a motor vehicle.

12. A fluid filter having a ring filter insert (1) without an internal frame according to any one of Claims 1 through 11.

## Revendications

1. Élément filtrant annulaire sans châssis intérieur pour un filtre à fluides, en particulier pour un filtre à liquides, par exemple un filtre à huile ou un filtre à carburant,
- comprenant un matériau filtrant (2) plissé, disposé en forme d'anneau, qui est équipé sur chacune de ses extrémités axiales d'un disque d'extrémité (4),
- au moins l'un des disques d'extrémité (4) étant réalisé sous forme de disque d'extrémité (4) à ouverture centrale et présentant, fabriqué d'une seule pièce avec lui, un collet d'étanchéité (5) dépassant axialement qui présente une zone d'étanchéité ou ligne d'étanchéité (6) annulaire et linéaire qui à l'état monté de l'élément filtrant annulaire (1) s'applique radialement avec précontrainte radiale sur une surface d'étanchéité (7) essentiellement cylindrique du filtre à fluides,
- le collet d'étanchéité (5) étant réalisé de sorte qu'il produit la précontrainte radiale sans l'utilisation de moyens de précontrainte séparés supplémentaires,
- le collet d'étanchéité (5) étant réalisé de sorte qu'à l'état monté de l'élément filtrant annulaire (1) il déploie son effet d'étanchéité même pour un maintien flottant axialement par rapport à la surface d'étanchéité (7),
**caractérisé en ce**
**que** le collet d'étanchéité (5) présente une section d'écartement (8) cylindrique s'étendant axialement, dépassant du disque d'extrémité (4), qui supporte une section d'étanchéité (9) présentant la ligne d'étanchéité (6) et possède dans la direction radiale une épaisseur de paroi (12) constante, qui représente environ 40% à 60% d'une épaisseur (13) du disque d'extrémité (4) mesurée dans la direction axiale.

2. Élément filtrant annulaire suivant la revendication 1, **caractérisé en ce que** la section d'écartement (8) est disposée sur le bord radialement intérieur (15) du disque d'extrémité (4) et se termine en affleurement radial de ce bord (15).

3. Élément filtrant annulaire suivant la revendication 2, **caractérisé en ce que** la section d'écartement (8) dépasse axialement vers l'extérieur du disque d'extrémité (4) et qu'une différence entre un rayon intérieur (16) du matériau filtrant (2) et un rayon intérieur (17) de la section d'écartement (8) est plus petite que l'épaisseur de paroi (12) de la section d'écartement (8).

4. Élément filtrant annulaire suivant l'une des revendications 2 et 3, **caractérisé en ce que** la section d'écartement (8) dépasse axialement vers l'extérieur du disque d'extrémité (4) et que le matériau filtrant (2) s'étend essentiellement jusqu'au bord (15) radialement intérieur du disque d'extrémité (4) et se termine essentiellement en affleurement radial de ce bord (15) et de la section d'écartement (8).

5. Élément filtrant annulaire suivant l'une des revendications 1 à 4, **caractérisé en ce qu'**une longueur axiale (14) de la section d'écartement (8) représente environ 80% à 200% de l'épaisseur (13) du disque d'extrémité (4).

6. Élément filtrant annulaire suivant l'une des revendications 1 à 5, **caractérisé en ce**
- **que** la section d'étanchéité (9) présente deux sections partielles (10, 11) de profil rectiligne,
- la section partielle intérieure (10) reliant la section d'écartement (8) à la section partielle extérieure (11),
- la section partielle intérieure (10) étant inclinée en direction de la surface d'étanchéité (7), tandis que la section partielle extérieure (11) est inclinée à l'opposé de la surface d'étanchéité (7),
- les deux sections partielles (10, 11) présentant transversalement à leur direction d'extension respective la même épaisseur (18, 19),
- l'épaisseur de paroi (12) de la section d'écartement (8) étant choisie égale en grandeur à l'épaisseur (18, 19) des sections partielles (10, 11).

7. Élément filtrant annulaire suivant l'une des revendications 1 à 6, **caractérisé en ce que** le disque d'extrémité (4) est constitué d'une matière thermoplastique et que le matériau filtrant est assemblé par plastification avec le disque d'extrémité (4).

8. Élément filtrant annulaire suivant l'une des revendications 1 à 7, **caractérisé en ce qu'**un rayon intérieur (20) de la ligne d'étanchéité (6) est plus petit à l'état détendu d'environ 2% à 4% et/ou d'environ 0,3 mm à 0,5 mm que le rayon extérieur (21) de la surface d'étanchéité (7).

9. Élément filtrant annulaire au moins suivant la revendication 2, **caractérisé en ce que** le rayon intérieur (17) de la section d'écartement (8) à l'état détendu est plus grand d'environ 0,5% à 4% et/ou d'environ 0,1 mm à 0,5 mm que le rayon extérieur (21) de la surface d'étanchéité (7).

10. Élément filtrant annulaire suivant l'une des revendications 1 à 9, **caractérisé en ce que** l'élément filtrant annulaire (1) est réalisé pour l'utilisation dans un filtre à liquides, en particulier un filtre à huile ou un filtre à carburant.

11. Élément filtrant annulaire suivant la revendication 10, **caractérisé en ce que** l'élément filtrant annulaire (1) est réalisé pour l'utilisation dans un filtre à liquides d'un véhicule automobile.

12. Filtre à liquides comportant un élément filtrant annulaire sans châssis (1) suivant l'une des revendications 1 à 11.
